Europäisches Patentamt

European Patent Office

Office européen des brevets

(11) Publication number: **0 145 846 B1**

# EUROPEAN PATENT SPECIFICATION

(45) Date of publication of patent specification: **12.06.91**  (51) Int. Cl.⁵: **A01N 25/10**

(21) Application number: **84110300.5**

(22) Date of filing: **29.08.84**

The file contains technical information submitted
after the application was filed and not included in
this specification

(54) Polyhdroxy polymer delivery system.

(30) Priority: **01.12.83 US 557074**

(43) Date of publication of application:
**26.06.85 Bulletin 85/26**

(45) Publication of the grant of the patent:
**12.06.91 Bulletin 91/24**

(84) Designated Contracting States:
**AT BE CH DE FR GB IT LI LU NL SE**

(56) References cited:
**EP-A- 0 051 161**    **EP-A- 0 088 552**
**WO-A- /84289**    **FR-A- 1 304 891**
**GB-A- 734 624**    **US-A- 2 876 160**

(73) Proprietor: **ATOCHEM NORTH AMERICA, INC.**
**(a Pennsylvania corp.)**
**Three Parkway**
**Philadelphia Pennsylvania 19102(US)**

(72) Inventor: **Huber, Ludwig K.**
**612 Wallace Drive**
**Wayne Pennsylvania 19087(US)**
Inventor: **Monsimer, Harold G.**
**2916 Toll Gate Drive**
**Norristown Pennsylvania 19403(US)**

(74) Representative: **Kraus, Walter, Dr. et al**
**Patentanwälte Kraus, Weisert & Partner**
**Thomas-Wimmer-Ring 15**
**W-8000 München 22(DE)**

## Description

This invention relates to a process for making compositions for controlled release of biologically active materials. More specifically, it relates to a process for making polyhydroxy polmyer/salt compositions with biologically active materials contained within a matrix.

The compositions obtained in accordance with the present invention are particularly useful for the prolonged delivery of hebicides and pesticides by granular application to the soil. As such they decrease the loss of active ingredients.

It is known that polyhydroxy polymers such as polyvinyl alcohols (PVA) can be coagulated from aqueous systems by the addition of various salts. An application of this fact can be found in FR-A-1,304,891, which describes a process for converting PVA into microcapsules by treating PVA dye emulsions with inorganic sulfates.

U.S.-A-4,382,813 describes the coagulation or precipitation of an entrapped pesticidal agent by the rapid, insolubilization of a starch alkoxide containing material with a bivalent cation selected from the group of calcium, barium, and strontium. These systems are limited to materials having low solubility in water and result in a strongly basic matrix and are not applicable to alkali sensitive materials.

EP-A-0 088 552 refers to the encapsulation by entrapment within polyhydroxy polymer borates. Chemical biological agent to be encapsulated are dissolved or dispersed in an aqueous paste of gel-forming polyhydroxy polymer. Subsequent addition of boric acid or a boric acid derivative at an alkaline pH converts the paste into a gel, thereby entrapping the agents in a protective matrix.

EP-A-0 051 161 is directed to the encapsulation by entrapment within starch adduct matrix. Water-insoluble chemical biological agents to be encapsulated are dispersed in an aqueous paste of a starch-containing material alkoxide. Subsequent addition of selected water soluble alkali earth metal cations insolubilize the paste, thereby entrapping the agents in a protective matrix.

GB-A-734,624 is directed to compositions comprising one or more active substances and, as carrier therefor, one or more cellulose ethers which are soluble in water or aqueous alkali in the cold, but which are insoluble in hot water.

FR-A-1 304 891 relates to the preparation of microcapsules and describes equivalents of sulfates and borates to be preferred precipitants for polyvinyl alcohol.

US-A-2,876,160 is directed to a method of dispersing various materials, and more particularly water-insoluble materials, in solutions of specific starches or derivatives thereof, and then drying the resultant dispersions in order to produce new and novel dry products in which the dispersed phase is imbedded in a starchy matrix and is protected from air oxidation, chemical changes, evaporation, and the like.

WO-A1-84/02829 refers to a composition comprising sodium carboxymethyl cellulose having an etherification degree of 60-80% and a molecular weight of $1-5 \times 10^5$ - preferably in the form of a solution- and optionally in an amount of 5-10% related to the weight of the sodium carboxymethyl cellulose- a surfactant and/or plant growth regulating agent and/or microelements.

No prior art was found that discloses the present invention.

The present invention is directed to a process for making a controlled release biologically active composition which comprises emulsifying/dispersing a biologically active agent, optionally on a filler, in an aqueous polyhydroxy polymer system selected from the group of unmodified starches, dextrins, natural gums, and mixtures thereof, adding an inorganic sulfate, phosphate or both and optional filler(s) while thoroughly mixing, separating the precipitated polymer from the aqueous phase, drying the product, and reducing the product to the desired particle size and to a process for making a controlled release biologically active composition which comprises emulsifying/dispersing a biologically active agent, on or together with an inorganic sulfate, phosphate or both plus an optional filler, in an aqueous polyhydroxy polymer system selected from the group of unmodified starches, dextrins, natural gums, and mixtures thereof, separating the precipitated polymer from the aqueous phase, drying the product and reducing the product to the desired particle size.

The present invention also relates to a process for making a controlled release biologically active composition comprising emulsifying/dispersing a biologically active agent, on or together with an inorganic sulfate, phosphate or both plus optional filler, in an aqueous polyhydroxy polymer system selected from the group of unmodified starches, dextrins, natural gums and mixtures thereof, adding another portion of an inorganic sulfate, phosphate or mixtures thereof and optional filler while thoroughly mixing, separating the precipitated polymer from the aqueous phase, drying the product and reducing the product to the desired particle size.

Moreover, the present invention relates to a controlled release biologically active composition obtained by said processes.

The present invention requires a biologically active agent, a water soluble/swellable polyhydroxy polymer, a suited inorganic salt, and optional filler(s). The active ingredient, optionally on a filler/inorganic salt, is emulsified/dispersed in the aqueous polyhydroxy polymer system (solution-gel-paste), the inorganic salt or optional filler is added (if not already added as a component with the active ingredient) and the mixture thoroughly blended. Depending on the amount and type of salt used, three results can take place:

1. Precipitation
2. Additional thickening of the gel
3. Little apparent effect

Each requires somewhat different treatment in order to obtain a product.

If the salt and concentration are such that coagulation of the polyhydroxy polymer results, a distinct aqueous phase develops which is separated by decantation, filtration or centrifugation. The precipitate contains part of the inorganic salt and other materials soluble in the brine, and most of the water insoluble organic materials present in the reaction mixture (solvents, active ingredient, etc.). Obviously, if the absorbing power of the coagulated product exceeds the amount of water present in the reaction mixture, all brine is retained in the coagulate. In either case the residual water is removed by drying at ambient and/or elevated temperature (usually ~ 75°C). If necessary, the dried product is ground and classified to the desired particle size.

For soil application the preferred range is 14-40 mesh, most preferred 24-40 mesh, and for other uses smaller or larger particles may be preferred.

If salts are used at concentrations which do not result in separation of the water, a product can be obtained by drying. During the drying process the salt concentration increases resulting presumably in a gradual coagulation of the polyhydroxy polymer. The dried product is ground and classified to the desired particle size. Compared to the above procedure, this method has the advantage that at least in some cases, higher loads of and/or water soluble active ingredient(s) can be incorporated into the matrix.

In the preparation of the composition of the present invention from commercial starch, first, the starch is heated with hot water to form a thick paste. The paste formation step can be carried out at temperatures of 60 - 100°C without special equipment. The ratio of starch to water can be varied from 1:2 to 1:12 without apparent effect on the product. The biological agent to be delivered can be added to the hot paste which is convenient when working with low melting solids or the paste can be cooled to near room temperature where volatile or heat sensitive materials are involved. The biological agent is blended with this paste to form a uniform mixture which, in most cases, can be allowed to stand for some time without separation. Coprecipitation of the matrix is brought about by the addition of the salt. The amount of salt used can be varied from 10 grams to 30 grams per 100 grams of water.

A variety of water soluble/swellable polyhydroxy polymers can be used for the present invention. Included are various unmodified starches, dextrins, natural gums, cellulose derivatives etc.

Examples of the polyhydroxy polymers are the various partially or fully hydrolyzed polyvinyl acetates in various molecular weight ranges, corn starch, gum arabic, methyl cellulose, hydroxyethyl cellulose, hydroxypropyl cellulose, methylhydroxyethyl cellulose etc.

Examples of the inorganic salts of this invention include primarily water soluble sulfates and phosphates such as various alkaline and alkaline earth sulfates (Na, K, $NH_4$ Li, Mg, Ca), aluminium and mixed alkali/aluminium sulfates, zinc sulfate, ferrous sulfate, and various mono-, di- and tri-basic alkali phosphates, and combinations thereof, including various buffers. The salts can be used as solids or in solution.

With respect to optional fillers, a large variety of powdered or granular materials can be employed. Examples are diatomites, attapulgites, bentonites, talcs, montmorillonites, perlites, vermiculites, corn cob grits, wood flour, lignin sulfonates, etc.

The amounts of the various ingredients in the total formulation can be varied widely, i.e., from 5-95% (by weight) of the polyhydroxy polymer(s), 2-50% of the active ingredient(s), 0-80% of the filler(s), and 5-90% of the salt(s). Preferred ranges are 5-90% of polyhydroxy polymer, 5-35% of active ingredient(s), and 30-80% of filler(s). As indicated earlier, the amount of salt depends strongly on the particular system desired, and its optimum is best determined experimentally.

The matrice of the present invention can be used for the delivery of insecticides, acaricides, herbicides, fungicides, nematocides, bactericides, rodenticides, fumigants, animal repellents, insect repellents, plant growth regulators, fertilizers, pheromones, sex lures, flavors, odors, drugs, diet supplements, and biological insect control agents. Typical insectides are, e.g., methyl parathion, parathion, ethoprop, fonofos, fenitrothion, chlorpyrifos, diazinon, phorate, etc., which can be used undiluted, in the form of suited solutions or emulsifiable concentrates, on fillers or salts, or in combinations. Typical herbicides include endothall, trifluralin, 2,4-D, monuron, dicamba, atrazine, alachlor, butylate and EPTC.

The type of biologically active agent that might be delivered from one of these matrices is limited only by its compatibility with the system. For example, the biologically active agent should not be decomposed by the process, react in such a way as to prevent matrix formation, or be irreversibly bound to the polymer. Water solubility and/or polymer compatibility should be such that the active agent should not be substantially leached into the aqueous phase, in those cases where the matrix material is separated by filtration or decantation.

The pH under which the materials of the present invention are formed can be varied from 3-12 by the selection of appropriate salts. In fact, such systems might be buffered to accommodate highly pH sensitive materials such as natural biological products.

Example 1

Sixteen grams of chlorpyrifos-loaded calcium sulfate (prepared by soaking 15.4 grams of Snow White Filler (United States Gypsum Company) with 3.6 grams of technical chlorpyrifos in about 40 ml methylene chloride and removing volatiles at ~ 50°C/130 mm Hg) were dispersed in 10.0 grams of a 20% solution of gum arabic in water. The mixture was dried for one day at ambient temperature and then 2-1/2 hours at ~ 75°C. Subsequently, the product was ground in a blender and classified to a particle size of 14-40 mesh. The resulting granulate contained 15.6% of active ingredient.

Example 2

In an experiment similar to Example 1, but substituting 13.3 grams of a 15% aqueous solution of gum ghatti for the gum arabic, a granulate containing 16.3% of active ingredient was obtained.

Example 3

In an experiment similar to Example 1 but substituting 10.0 grams of a 20% aqueous solution of dextrin (sold under the trademark 700 DEX by Clinton Corn Processing Company) for the gum arabic, a granulate containing 15.7% of active ingredient was obtained.

Example 4

A paste was formed by heating 16 grams of starch in 100 ml of water at 70-80°C. This paste was allowed to cool slightly and 4.5 grams of technical chlorpyrifos was blended in until a uniform paste was obtained. On addition and dissolution of 20 grams of anhydrous sodium sulfate the starch coagulated to give a filterable solid. This product (20 grams) was dried, ground and sieved to a uniform particle size. The sample analyzed for 11.6% of chlorpyrifos.

Example 5

Using the procedure given, in Example 4, 5 grams of methyl parathion was entrapped in a starch matrix to give 20.9 grams of product which analyzed for 11.8% of methyl parathion.

Example 6

Using the procedure given in Example 4, 5 grams of diazinon was entrapped in a starch matrix to give 29.2 grams of product which analyzed for 12.2% of diazinon.

Example 7

Using the procedure given in Example 4, 5 grams of diazinon was entrapped using 30 grams of sodium sulfate to give 26.9 grams of product which analyzed for of 13.8% diazinon.

Example 8

Using the procedure given in Example 4, 5 grams of trifluralin was entrapped to give 35.1 grams of product which analyzed for 13.1% of trifluralin.

Example 9

Using the procedure given in Example 4, but substituting magnesium sulfate for the sodium sulfate, 5 grams of diazinon was entrapped to give 24.1 grams of product which analyzed for 15.3% of diazinon.

Example 10

Using the procedure given in Example 4, but substituting magnesium sulfate for the sodium sulfate, 5 grams of methyl parathion was entrapped to give 22.4 grams of product which analyzed for 14.0% of methyl parathion.

Example 11

Using the procedure given in Example 4, but substituting magnesium sulfate for the sodium sulfate, 5 grams of trifluralin was entrapped to give 25.6 grams of product which analyzed for 14.8% of trifluralin.

Example 12

Using the procedure given in Example 4 but substituting sodium meta phosphate for the sodium sulfate, 5 grams of diazinon was entrapped to give 24.8 grams of product which analyzed for 14.5% of diazinon.

Example 13

Using the procedure given in Example 4 but substituting sodium meta phosphate for the sodium sulfate, 5 grams of methyl parathion was entrapped to give 21.3 grams of product which analyzed for 14.8% of methyl parathion.

Example 14

Using the procedure given in Example 4 but substituting sodium meta phosphate for the sodium sulfate, 5 grams of trifluralin was entrapped to give 23.6 grams of product which analyzed for 16.5% of trifluralin.

Example 15

The granular products of Example 1 to 3 were tested in a laboratory soil bioassay using three-day old housefly larvae as test organisms. The soil was treated with the granular product; thereafter twenty-five larvae were exposed to the treated soil at intervals of 3, 31, 45 and 59 days; the number of adult flies emerging from the soil was counted. The granular product was used at a rate equivalent to 0,9 g of active ingredient per m² (1/2 lb. of active ingredient per acre) applied in 6 "bands spaced 40" apart. Percent killed is the percent reduction in adult houseflies emerging from the soil. The results are recorded in Table I.

## Table I

### % Killed

| Days | 3 | 31 | 45 | 59 |
|------|---|----|----|----|
| Example 1 | 44 | 93 | 76 | 41 |
| Example 2 | 56 | 74 | 75 | 47 |
| Example 3 | 85 | 86 | 68 | 26 |
| Lorsban 15G | 92 | 69 | 49 | 10 |
| Control | 7 | 0 | 7 | 0 |

Example 16

The product of Example 4 was tested by the method described in Example 15. The results are recorded in Table II.

## Table II

### % Killed

| Days | 7 | 17 | 31 | 45 | 59 |
|------|---|----|----|----|----|
| Example 4 | 100 | 66 | 67 | 72 | 25 |
| Lorsban 15G | 79 | 76 | 67 | 57 | 45 |
| Control | 1 | 0 | 4 | 14 | — |

**Claims**

1. A process for making a controlled release biologically active composition which comprises emulsifying/dispersing a biologically active agent, optionally on a filler, in an aqueous polyhydroxy polymer system selected from the group of unmodified starches, dextrins, natural gums, and mixtures thereof, adding an inorganic sulfate, phosphate or both and optional filler(s) while thoroughly mixing, separating the precipitated polymer from the aqueous phase, drying the product, and reducing the product to the desired particle size.

2. A process for making a controlled release biologically active composition which comprises emulsifying/dispersing a biologically active agent, on or together with an inorganic sulfate, phosphate or both plus an optional filler, in an aqueous polyhydroxy polymer system selected from the group of unmodified starches, dextrins, natural gums, and mixtures thereof, separating the precipitated polymer from the aqueous phase, drying the product, and reducing the product to the desired particle size .

3. A process for making a controlled release biologically active composition comprising emulsifying/dispersing a biologically active agent, on or together with an inorganic sulfate, phosphate or both plus optional filler, in an aqueous polyhydroxy polymer system selected from the group of unmodified starches, dextrins, natural gums and mixtures thereof, adding another portion of an inorganic sulfate, phosphate or mixtures thereof and optional filler while thoroughly mixing, separating the precipitated polymer from the aqueous phase, drying the product and reducing the product to the desired particle size.

4. The process of claim 1 wherein the biologically active agent is 0,0-dimethyl- or 0,0-diethyl-0-p-nitrophenyl phosphorothioate, the inorganic salt is selected from the group of alkali, ammonium, aluminum, and magnesium sulfates, and the optional filler is selected from the group of diatomites, attapulgites, bentonites, talcs, montmorillonites, kaolins, perlites, vermiculites, and corn cob grits.

5. The process of claim 2 wherein the biologically active agent is 0,0-diethyl-0-(3,5,6-trichloro-2-pyridyl) phosphorothioate and the inorganic salt is calcium sulfate.

6. The process of claim 1 wherein the biologically active agent is 0,0-dimethyl- or 0,0-diethyl-0-p-nitrophenyl phosphorothioate, the inorganic salt is selected from the group of alkali phosphates and mixtures thereof, and the filler is selected from the group of diatomites, attapulgites, bentonites, talcs, montmorillonites, kaolins, perlites, vermiculites, and corn cob grits.

7. The process of claim 1 which comprises co-precipitating a hydrophilic polymer selected from the group of unmodified starches, dextrins, natural gums, and mixtures thereof with a water insoluble biologically active agent by the addition of an inorganic salt selected from sulfates, phosphates, or mixtures thereof and separating the precipitated polymer from the aqueous phase.

8. The process of claim 7 in which the biologically active material is a herbicide.

9. The process of claim 8 in which the herbicide is a nitro compound.

10. A controlled release biologically active composition obtained by the processes of claims 1 to 3 characterized by comprising a biologically active agent contained in a matrix of a water soluble/swellable polyhydroxy polymer system selected from the group of unmodified starches, dextrins, natural gums, and mixtures thereof, an inorganic salt selected from the group of sulfates, phosphates and mixtures thereof, and optional filler(s).

11. The composition of claim 10 wherein the biologically active agent is selected from the group of insecticides, herbicides, plant growth regulators, nematocides, fungicides, bactericides, rodenticides, fumigants, animal and insect repellents, biological insect control agents, pheromones, sex lures, flavor and odor compositions, diet supplements, and drugs.

12. The composition of claim 10 wherein the biologically active agent is 0,0-dimethyl-0-p-nitrophenyl phosphorothioate, 0,0-diethyl-0-p-nitrophenyl phosphorothioate, 0-ethyl-S,S-dipropyl phosphorodithioate, S-[[(1,1-dimethylethyl)-thio]methyl]-0,0-diethyl phoshorodithioate, 0,0-dimethyl-0-(3-methyl-4-nitrophenyl) phosphorothioate, 0,0-diethyl-S-[(ethylthio)methyl] phosphorodithioate, 0-ethyl-S-phenylethyl phosphonodithioate, 0,0-diethyl-0-(3,5,6-trichloro-2-pyridyl) phosphorothioate, 0,0-diethyl-0-(2-isopropyl-6-methyl-5-pyrimidinyl) phosphorothioate, $\alpha,\alpha,\alpha$-trifluoro-2,6-dinitro-N, N-dipropyl-p-toluidine, N-(1-ethylpropyl)-3,4-dimethyl-2,6-dinitrobenzenamine, N-(2-chloroethyl)-$\alpha,\alpha,\alpha$-trifluoro-2, 6-dinitro-N,N-dipropyl-p-toluidine, N-(1-ethylpropyl)-3,4-dimethyl-2,6-dinitrobenzenamine, N-(2-chloroethyl)-$\alpha,\alpha,\alpha$-trifluoro-2,6-dinitro-N-propyl-p-toluidine, 2-chloro-N-(2,6-diethylphenyl)-N-(methoxymethyl)acetamide, and 2-chloro-N-(2-ethyl-6-methylphenyl)-N-(2-methoxy-1-methylethyl) acetamide.

13. The composition of claim 10 wherein the inorganic salt is selected from the group of sulfates.

14. The composition of claim 10 wherein the inorganic salt is selected from the group of phosphates.

EP 0 145 846 B1

15. The composition of claim 10 wherein the inorganic salt is a sulfate selected from the group of alkali, ammonium, magnesium, calcium, iron, zinc, aluminum and mixed alkali/aluminum sulfates, and mixtures thereof.

16. The composition of claim 10 wherein the inorganic salt is a phosphate selected from the group of alkali and ammonium phosphates, and mixtures thereof.

17. The composition of claim 10 wherein the inorganic salt is a mixture of sulfates and phosphates.

18. The composition of claim 10 wherein the filler is selected from the group of diatomites, attapulgites, bentonites, talcs, montmorillonites, kaolins, perlites, vermiculites, and corn cob grits.

19. The composition of claim 10 wherein the biologically active agent is 0,0-diethyl-0-(3,5,6-trichloro-2-pyridyl) phosphorothioate and the inorganic salt is calcium sulfate.

20. The composition of claim 10 wherein the biologically active agent is 0,0-dimethyl- or 0,0-diethyl-0-p-nitro-phenylphosphorothioate, the inorganic salt is selected from the group of alkali, ammonium, magnesium and calcium sulfates, and the filler is selected from the group of diatomites, attapulgites, bentonites, talcs, montmorillonites, kaolins, and corn cob grits.

Claims for the following Contracting State: AT

1. A process for making a controlled release biologically active composition which comprises emulsifying/dispersing a biologically active agent, optionally on a filler, in an aqueous polyhydroxy polymer system selected from the group of unmodified starches, dextrins, natural gums, and mixtures thereof, adding an inorganic sulfate, phosphate or both and optional filler(s) while thoroughly mixing, separating the precipitated polymer from the aqueous phase, drying the product, and reducing the product to the desired particle size.

2. A process for making a controlled release biologically active composition which comprises emulsifying/dispersing a biologically active agent, on or together with an inorganic sulfate, phosphate or both plus an optional filler, in an aqueous polyhydroxy polymer system selected from the group of unmodified starches, dextrins, natural gums, and mixtures thereof, separating the precipitated polymer from the aqueous phase, drying the product, and reducing the product to the desired particle size.

3. A process for making a controlled release biologically active composition comprising emulsifying/dispersing a biologically active agent on or together with an inorganic sulfate, phosphate or both plus optional filler, in an aqueous polyhydroxy polymer system selected from the group of unmodified starches, dextrins, natural gums, and mixtures thereof, adding another portion of an inorganic sulfate, phosphate or mixtures thereof and optional filler while thoroughly mixing, separating the precipitated polymer from the aqueous phase, drying the product, and reducing the product to the desired particle size.

4. The process of claim 1 wherein the biologically active agent is 0,0-dimethyl- or 0,0-diethyl-0-p-nitrophenyl phosphorothioate, the inorganic salt is selected from the group of alkali, ammonium, aluminum, and magnesium sulfates, and the optional filler is selected from the group of diatomites, attapulgites, bentonites, talcs, montmorillonites, kaolins, perlites, vermiculites, and corn cob grits.

5. The process of claim 2 wherein the biologically active agent is 0,0-diethyl-0-(3,5,6-trichloro-2-pyridyl) phosphorothioate and the inorganic salt is calcium sulfate.

6. The process of claim 1 wherein the biologically active agent is 0,0-dimethyl- or 0,0-diethyl-0-p-nitrophenyl phosphorothioate, the inorganic salt is selected from the group of alkali, phosphates and mixtures thereof, and the filler is selected from the group of diatomites, attapulgites, bentonites, talcs, montmorillonites, kaolins, perlites, vermiculites, and corn cob grits.

7. The process of claim 1 which comprises co-precipitating a hydrophilic polymer selected from the group of unmodified starches, dextrins, natural gums, and mixtures thereof with a water insoluble biologically active agent by the addition of an inorganic salt selected from sulfates, phosphates, or mixtures thereof and separating the precipitated polymer from the aqueous phase.

8. The process of claim 7 in which the biologically active material is a herbicide.

9. The process of claim 8 in which the herbicide is a nitro compound.

**Revendications**

1. Procédé de production d'une composition biologiquement active à libération contrôlée, qui consiste à émulsionner/disperser un agent biologiquement actif, facultativement sur une charge, dans une composition aqueuse d'un polymère polyhydroxylique choisi dans le groupe comprenant des amidons non modifiés, des dextrines, des gommes naturelles et leurs mélanges, à ajouter un sulfate ou phosphate inorganique, ou bien l'un et l'autre de ces sels, et une ou plusieurs charges facultatives tout en mélangeant soigneusement, à séparer le polymère précipité de la phase aqueuse, à déshydrater le produit et à réduire le produit au diamètre de particules désiré.

2. Procédé de production d'une composition biologiquement active à libération contrôlée, qui consiste à émulsionner/disperser un agent biologiquement actif, sur ou conjointement avec un sulfate ou phosphate inorganique, ou bien l'un et l'autre de ces sels, plus une charge facultative, dans une composition aqueuse d'un polymère polyhydroxylique choisi dans le groupe comprenant des amidons non modifiés, des dextrines, des gommes naturelles et leurs mélanges, à séparer le polymère précipité de la phase aqueuse, à déshydrater le produit et à réduire le produit au diamètre de particules désiré.

3. Procédé de production d'une composition biologiquement active à libération contrôlée, consistant à émulsionner/disperser un agent biologiquement actif, sur ou conjointement avec un sulfate ou phosphate inorganique, ou bien l'un et l'autre de ces sels, plus une charge facultative, dans une composition aqueuse d'un polymère polyhydroxylique choisi dans le groupe comprenant des amidons non modifiés, des dextrines, des gommes naturelles et leurs mélanges, à ajouter une autre portion d'un sulfate ou phosphate inorganique, ou d'un de leurs mélanges, et d'une charge facultative tout en mélangeant soigneusement, à séparer le polymère précipité de la phase aqueuse, à déshydrater le produit et à réduire le produit au diamètre de particules désiré.

4. Procédé suivant la revendication 1, dans lequel l'agent biologiquement actif est le phosphorothioate de O,O-diméthyl- ou O,O-diéthyl-O-p-nitrophényle, le sel inorganique est choisi dans le groupe comprenant des sulfates de métaux alcalins, d'ammonium, d'aluminium et de magnésium, et la charge facultative est choisie dans le groupe comprenant des diatomites, des attapulgites, des bentonites, des talcs, des montmorillonites, des kaolins, des perlites, des vermiculites et des particules de rafles de maïs.

5. Procédé suivant la revendication 2, dans lequel l'agent biologiquement actif est le phosphorothioate de O,O-diéthyl-O-(3,5,6-trichloro-2-pyridyle) et le sel inorganique est le sulfate de calcium.

6. Procédé suivant la revendication 1, dans lequel l'agent biologiquement actif est le phosphorothioate de O,O-diméthyl- ou O,O-diéthyl-O-p-nitrophényle, le sel inorganique est choisi dans le groupe comprenant des phosphates de métaux alcalins et leurs mélanges, et la charge est choisie dans le groupe comprenant des diatomites, des attapulgites, des bentonites, des talcs, des montmorillonites, des kaolins, des perlites, des vermiculites et des particules de rafles de maïs.

7. Procédé suivant la revendication 1, qui consiste à soumettre à une co-précipitation un polymère hydrophile choisi dans le groupe comprenant des amidons non modifiés, des dextrines, des gommes naturelles et leurs mélanges avec un agent biologiquement actif insoluble dans l'eau par addition d'un sel inorganique choisi entre des sulfates, des phosphates et leurs mélanges, et à séparer le polymère précipité de la phase aqueuse.

8. Procédé suivant la revendication 7, dans lequel la matière biologiquement active est un herbicide.

9

9. Procédé suivant la revendication 8, dans lequel l'herbicide est un composé à fonction nitro.

10. Composition biologiquement active à libération contrôlée obtenue par les procédés suivant les revendications 1 à 3, caractérisée en ce qu'elle comprend un agent biologiquement actif présent dans une matrice d'une composition d'un polymère polyhydroxylique soluble ou pouvant gonfler dans l'eau, choisi dans le groupe comprenant des amidons non modifiés, des dextrines, des gommes naturelles et leurs mélanges, un sel inorganique choisi dans le groupe comprenant des sulfates, des phosphates et leurs mélanges, et une ou plusieurs charges facultatives.

11. Composition suivant la revendication 10, dans laquelle l'agent biologiquement actif est choisi dans le groupe comprenant des insecticides, des herbicides, des régulateurs de croissance des plantes, des nématicides, des fongicides, des bactéricides, des rodenticides, des préparations pour fumigations, des insectifuges et des produits repoussant d'autres animaux, des agents biologiques de lutte contre les insectes, des phéromones, des leurres sexuels, des compositions aromatisantes et des compositions odorantes, des agents de supplémentation alimentaire et des médicaments.

12. Composition suivant la revendication 10, dans laquelle l'agent biologiquement actif est le phosphorothioate de O,O-diméthyl-O-p-nitrophényle, le phosphorothioate de O,O-diéthyl-O-p-nitrophényle, le phosphorodithioate de O-éthyl-S,S-dipropyle, le phosphorodithioate de S-[[(1,1-diméthyléthyl)-thio]-méthyl]-O,O-diéthyle, le phosphorothioate de O,O-diméthyl-O-(3-méthyl-4-nitrophényle), le phosphorodithioate de O,O-diéthyl-S-[(éthylthio)méthyle], le phosphorodithioate de O-éthyl-S-phényléthyle, le phosphorothioate de O,O-diéthyl-O-(3,5,6-trichloro-2-pyridyle),le phosphorothioate de O,O-diéthyl-O-(2-isopropyl-6-méthyl-5-pyrimidinyle), la $\alpha,\alpha,\alpha$-trifluoro-2,6-dinitro-N,N-dipropyl-p-toluidine, la N-(1-éthylpropyl)-3,4-diméthyl-2,6-dinitrobenzène-amine, la N-(2-chloréthyl)-$\alpha,\alpha,\alpha$-trifluoro-2,6-dinitro-N,N-dipropyl-p-toluidine, la N-(1-éthylpropyl)-3,4-diméthyl-2,6-dinitrobenzène-amine, la N-(2-chloréthyl)-$\alpha,\alpha,\alpha$-trifluoro-2,6-dinitro-N-propyl-p-toluidine, le 2-chloro-N-(2,6-diéthylphényl)-N-(méthoxyméthyl)-acétamide et le 2-chloro-N-(2-éthyl-6-méthylphényl)-N-(2-méthoxy-1-méthyléthyl)-acétamide.

13. Composition suivant la revendication 10, dans laquelle le sel inorganique est choisi dans le groupe des sulfates.

14. Composition suivant la revendication 10, dans laquelle le sel inorganique est choisi dans le groupe des phosphates.

15. Composition suivant la revendication 10, dans laquelle le sel inorganique est un sulfate choisi dans le groupe comprenant des sulfates de métaux alcalins, d'ammonium, de magnésium, de calcium, de fer, de zinc et d'aluminium ainsi que des sulfates mixtes de métaux alcalins et d'aluminium, et leurs mélanges.

16. Composition suivant la revendication 10, dans laquelle le sel inorganique est un phosphate choisi dans le groupe comprenant des phosphates de métaux alcalins et des phosphates d'ammonium, ainsi que leurs mélanges.

17. Composition suivant la revendication 10, dans laquelle le sel inorganique est un mélange de sulfates et de phosphates.

18. Composition suivant la revendication 10, dans laquelle la charge est choisie dans le groupe comprenant des diatomites, des attapulgites, des bentonites, des talcs, des montmorillonites, des kaolins, des perlites, des vermiculites et des particules de rafles de maïs.

19. Composition suivant la revendication 10, dans laquelle l'agent biologiquement actif est le phosphorothioate de O,O-diéthyl-O-(3,5,6-trichloro-2-pyridyle) et le sel inorganique est le sulfate de calcium.

20. Composition suivant la revendication 10, dans laquelle l'agent biologiquement actif est le phosphorothioate de O,O-diméthyl- ou O,O-diéthyl-O-p-nitrophényle, le sel inorganique est choisi dans le groupe comprenant des sulfates de métaux alcalins, d'ammonium, de magnésium et de calcium, et la charge est choisie dans le groupe comprenant des diatomites, des attapulgites, des bentonites, des talcs, des montmorillonites, des kaolins et des particules de rafles de maïs.

## EP 0 145 846 B1

Revendications pour l'Etat contractant suivant: AT

1. Procédé de production d'une composition biologiquement active à libération contrôlée, qui consiste à émulsionner/disperser un agent biologiquement actif, facultativement sur une charge, dans une composition aqueuse d'un polymère polyhydroxylique choisi dans le groupe comprenant des amidons non modifiés, des dextrines, des gommes naturelles et leurs mélanges, à ajouter un sulfate ou phosphate inorganique, ou bien l'un et l'autre de ces sels, et une ou plusieurs charges facultatives tout en mélangeant soigneusement, à séparer le polymère précipité de la phase aqueuse, à déshydrater le produit et à réduire le produit au diamètre de particules désiré.

2. Procédé de production d'une composition biologiquement active à libération contrôlée, qui consiste à émulsionner/disperser un agent biologiquement actif, sur ou conjointement avec un sulfate ou phosphate inorganique, ou bien l'un et l'autre de ces sels, plus une charge facultative, dans une composition aqueuse d'un polymère polyhydroxylique choisi dans le groupe comprenant des amidons non modifiés, des dextrines, des gommes naturelles et leurs mélanges, à séparer le polymère précipité de la phase aqueuse, à déshydrater le produit et à réduire le produit au diamètre de particules désiré.

3. Procédé de production d'une composition biologiquement active à libération contrôlée, consistant à émulsionner/disperser un agent biologiquement actif sur ou conjointement avec un sulfate ou phosphate inorganique, ou bien l'un et l'autre de ces sels, plus une charge facultative, dans une composition aqueuse d'un polymère polyhydroxylique choisi dans le groupe comprenant des amidons non modifiés, des dextrines, des gommes naturelles et leurs mélanges, à ajouter une autre portion d'un sulfate ou phosphate inorganique, ou d'un de leurs mélanges, et d'une charge facultative tout en mélangeant soigneusement, à séparer le polymère précipité de la phase aqueuse, à déshydrater le produit et à réduire le produit au diamètre de particules désiré.

4. Procédé suivant la revendication 1, dans lequel l'agent biologiquement actif est le phosphorothioate de O,O-diméthyl- ou O,O-diéthyl-O-p-nitrophényle, le sel inorganique est choisi dans le groupe comprenant des sulfates de métaux alcalins, d'ammonium, d'aluminium et de magnésium, et la charge facultative est choisie dans le groupe comprenant des diatomites, des attapulgites, des bentonites, des talcs, des montmorillonites, des kaolins, des perlites, des vermiculites et des particules de rafles de maïs.

5. Procédé suivant la revendication 2, dans lequel l'agent biologiquement actif est le phosphorothioate de O,O-diéthyl-O-(3,5,6-trichloro-2-pyridyle) et le sel inorganique est le sulfate de calcium.

6. Procédé suivant la revendication 1, dans lequel l'agent biologiquement actif est le phosphorothioate de O,O-diméthyl- ou O,O-diéthyl-O-p-nitrophényle, le sel inorganique est choisi dans le groupe comprenant des phosphates de métaux alcalins et leurs mélanges, et la charge est choisie dans le groupe comprenant des diatomites, des attapulgites, des bentonites, des talcs, des montmorillonites, des kaolins, des perlites, des vermiculites et des particules de rafles de maïs.

7. Procédé suivant la revendication 1, qui consiste à soumettre à une co-précipitation un polymère hydrophile choisi dans le groupe comprenant des amidons non modifiés, des dextrines, des gommes naturelles et leurs mélanges avec un agent biologiquement actif insoluble dans l'eau par addition d'un sel inorganique choisi entre des sulfates, des phosphates et leurs mélanges, et à séparer le polymère précipité de la phase aqueuse.

8. Procédé suivant la revendication 7, dans lequel la matière biologiquement active est un herbicide.

9. Procédé suivant la revendication 8, dans lequel l'herbicide est un composé à fonction nitro.

## Ansprüche

1. Verfahren zur Herstellung eines biologisch aktiven Mittels mit kontrollierter Freigabe, dadurch **gekennzeichnet,** daß ein biologisch aktives Mittel, gegebenenfalls auf einem Füllstoff, in einem wäßrigen Polyhydroxypolymer-System, ausgewählt aus der Gruppe nicht-modifizierte Stärken, Dextrine, natürli-

11

che Gummis und ihren Gemischen, emulgiert/dispergiert wird, ein anorganisches Sulfat, Phosphat oder beide und gegebenenfalls ein(e) Füllstoff(e) zugegeben wird, das Gemisch innigst gemischt wird, das ausgefallene Polymere von der wäßrigen Phase abgetrennt, das Produkt getrocknet und das Produkt auf die gewünschte Teilchengröße zerkleinert wird.

2. Verfahren zur Herstellung eines biologisch aktiven Mittels mit kontrollierter Freigabe, dadurch **gekennzeichnet,** daß ein biologisch aktives Mittel auf oder zusammen mit einem anorganischen Sulfat, Phosphat oder beiden und gegebenenfalls einem Füllstoff in einem wäßrigen Polyhydroxypolymer-System, ausgewählt aus der Gruppe nicht-modifizierte Stärken, Dextrine, natürliche Gummis und ihren Gemischen, emulgiert/dispergiert wird, das ausgefallene Polymere von der wäßrigen Phase abgetrennt, das Produkt getrocknet und das Produkt zu der gewünschten Teilchengröße zerkleinert wird.

3. Verfahren zur Herstellung eines biologisch aktiven Mittels mit kontrollierter Freigabe, dadurch **gekennzeichnet,** daß ein biologisch aktives Mittel auf oder zusammen mit einem anorganischen Sulfat, Phosphat oder beiden und gegebenenfalls einem Füllstoff in einem wäßrigen Polyhydroxypolymer-System, ausgewählt aus der Gruppe nicht-modifizierte Stärken, Dextrine, natürliche Gummis und ihren Gemischen, emulgiert/dispergiert wird, ein weiterer Teil eines anorganischen Sulfats, Phosphats oder ihren Gemischen und gegebenenfalls Füllstoff zugegeben wird, während gut gemischt wird, das ausgefallene Polymer von der wäßrigen Phase abgetrennt, das Produkt getrocknet und das Produkt auf die gewünschte Teilchengröße zerkleinert wird.

4. Verfahren nach Anspruch 1, dadurch **gekennzeichnet,** daß das biologisch aktive Mittel O,O-Dimethyl- oder O,O-Diethyl-O-p-nitrophenyl-phosphorthioat ist, das anorganische Salz aus der Gruppe Alkali-, Ammonium-, Aluminium- und Magnesiumsulfaten ausgewählt wird und der gegebenenfalls vorhandene Füllstoff ausgewählt wird aus der Gruppe Diatomite, Attapulgite, Bentonite, Talke, Montmorillonite, Kaoline, Perlite, Vermiculite und Maiskolbengries.

5. Verfahren nach Anspruch 2, dadurch **gekennzeichnet,** daß das biologisch aktive Mittel O,O-Diethyl-O-(3,5,6-trichlor-2-pyridyl)-phosphorthioat und das anorganische Salz Calciumsulfat sind.

6. Verfahren nach Anspruch 1, dadurch **gekennzeichnet,** daß das biologisch aktive Mittel O,O-Dimethyl- oder O,O-Diethyl-O-p-nitrophenyl-phosphorthioat ist, das anorganische Salz ausgewählt wird aus der Gruppe Alkaliphosphat und ihren Gemischen und der Füllstoff ausgewählt wird aus der Gruppe Diatomite, Attapulgite,Bentonite, Talke, Montmorillonite, Kaoline, Perlite, Vermiculite und Maiskolbengries.

7. Verfahren nach Anspruch 1, dadurch **gekennzeichnet,** daß ein hydrophiles Polymeres, ausgewählt aus der Gruppe nicht-modifizierte Stärken, Dextrine, natürliche Gummis und ihren Gemischen, mit einem wasserunlöslichen biologisch aktiven Mittel durch Zugabe eines anorganischen Salzes, ausgewählt unter Sulfaten, Phosphaten und ehren Gemischen, copräzipitiert wird und das ausgefallene Polymere von der wäßrigen Phase abgetrennt wird.

8. Verfahren nach Anspruch 7, dadurch **gekennzeichnet,** daß das biologisch aktive Material ein Herbizid ist.

9. Verfahren nach Anspruch 8, dadurch **gekennzeichnet,** daß das Herbizid eine Nitroverbindung ist.

10. Biologisch aktives Mittel mit kontrollierter Freigabe, erhalten nach den Verfahren der Ansprüche 1 bis 3, dadurch **gekennzeichnet,** daß es ein biologisch aktives Mittel, das in einer Matrix aus einem wasserlöslichen/quellbaren Polyhydroxypolymer-System, ausgewählt aus der Gruppe nicht-modifizierte Stärken, Dextrinen, natürliche Gummis und ihren Gemischen, vorhanden ist, ein anorganisches Salz, ausgewählt aus der Gruppe Sulfate, Phosphate und ihren Gemischen, und gegebenenfalls einen Füllstoff oder mehrere Füllstoffe enthält.

11. Mittel nach Anspruch 10, dadurch **gekennzeichnet,** daß das biologisch aktive Mittel ausgewählt wird aus der Gruppe Insektizide, Herbizide, Pflanzenwachstums-Regulatoren, Nematozide, Fungizide, Bakterizide, Rodentizide, Räuchermittel, Tier- und Insektenabwehrmittel, biologische Mittel zur Insektenkontrolle, Pheromonen, Sexuallockstoffen, Geschmacks- bzw. Aromastoffen und Geruchsstoffen, Diätergänzungsmittel und Arzneimittel.

**12.** Mittel nach Anspruch 10, dadurch **gekennzeichnet,** daß das biologisch aktive Mittel O,O-Dimethyl-O-p-nitrophenyl-phosphorthioat, O,O-Diethyl-O-p-nitrophenyl-phosphorthioat, O-Ethyl-S,S-dipropyl-phosphordithioat, S-[[(1,1-Dimethyl-ethyl)-thio]methyl]-O,O-diethyl-phosphordithioat, O,O-Dimethyl-O-(3-methyl-4-nitrophenyl)-phosphorthioat, O,O-Diethyl-S-[(ethylthio)methyl]-phosphordithioat, O-Ethyl-S-phenylethyl-phosphordithioat, O,O-Diethyl-O-(3,5,6-trichlor-2-pyridyl)-phosphorthioat, O,O-Diethyl-O-(2-isopropyl-6-methyl-5-pyrimidinyl)-phosphorthioat, α,α,α-Trifluor-2,6-di-nitro-N,N-dipropyl-p-toluidin, N-(1-Ethylpropyl)-3,4-dimethyl-2,6-dinitrobenzolamin, N-(2-Chlorethyl)-α,α,α-trifluor-2,6-dinitro-N,N-dipropyl-p-toluidin, N-(1-Ethylpropyl)-3,4-dimethyl-2,6-dinitrobenzolamin, N-(2-Chlorethyl)-α,α,α-trifluor-2,6-dinitro-N-propyl-p-toluidin, 2-Chlor-N-(2,6-diethylphenyl)-N-(methoxymethyl)-acetamid und 2-Chlor-N-(2-ethyl-6-methylphenyl)-N-(2-methoxy-1-methylethyl)-acetamid ist.

**13.** Mittel nach Anspruch 10, dadurch **gekennzeichnet,** daß das anorganische Salz aus der Gruppe der Sulfate ausgewählt wird.

**14.** Mittel nach Anspruch 10, dadurch **gekennzeichnet,** daß das anorganische Salz aus der Gruppe der Phosphate ausgewählt wird.

**15.** Mittel nach Anspruch 10, dadurch **gekennzeichnet,** daß das anorganische Salz ein Sulfat ist, ausgewählt aus der Gruppe Alkali-, Ammonium-, Magnesium-, Calcium-, Eisen-, Zink-, Aluminium- und gemischten Alkali-/Aluminiumsulfaten und ihren Gemischen.

**16.** Mittel nach Anspruch 10, dadurch **gekennzeichnet,** daß das anorganische Salz ein Phosphat ist, ausgewählt aus der Gruppe Alkali- und Ammoniumphosphate und ihren Gemischen.

**17.** Mittel nach Anspruch 10, dadurch **gekennzeichnet,** daß das anorganische Salz ein Gemisch aus Sulfaten und Phosphaten ist.

**18.** Mittel nach Anspruch 10, dadurch **gekennzeichnet,** daß der Füllstoff ausgewählt wird aus der Gruppe Diatomite, Attapulgite, Bentonite, Talke, Montmorillonite, Kaoline, Perlite, Vermiculite und Maiskolbengries.

**19.** Mittel nach Anspruch 10, dadurch **gekennzeichnet,** daß das biologisch aktive Mittel O,O-Diethyl-O-(3,5,6-trichlor-2-pyridyl)-phosphorthioat und das anorganische Salz Calciumsulfat sind.

**20.** Mittel nach Anspruch 10, dadurch **gekennzeichnet,** daß das biologisch aktive Mittel O,O-Dimethyl- oder O,O-Diethyl-O-p-nitrophenyl-phosphorthioat ist, das anorganische Salz aus der Gruppe Alkali-,Ammonium-, Magnesium- und Calciumsulfat ausgewählt wird und der Füllstoff aus der Gruppe Diatomite, Attapulgite, Bentonite, Talke, Montmorillonite, Kaoline, Perlite, Vermiculite und Maiskolbengries ausgewählt wird.

Patentansprüche für folgenden Vertragsstaat: AT

**1.** Verfahren zur Herstellung eines biologisch aktiven Mittels mit kontrollierter Freigabe, dadurch **gekennzeichnet,** daß ein biologisch aktives Mittel, gegebenenfalls auf einem Füllstoff, in einem wäßrigen Polyhydroxypolymer-System, ausgewählt aus der Gruppe nicht-modifizierte Stärken, Dextrine, natürliche Gummis und ihren Gemischen, emulgiert/dispergiert wird, ein anorganisches Sulfat, Phosphat oder beide und gegebenenfalls ein(e) Füllstoff(e) zugegeben wird, das Gemisch innigst gemischt wird, das ausgefallene Polymere von der wäßrigen Phase abgetrennt, das Produkt getrocknet und das Produkt auf die gewünschte Teilchengröße zerkleinert wird.

**2.** Verfahren zur Herstellung eines biologisch aktiven Mittels mit kontrollierter Freigabe, dadurch **gekennzeichnet,** daß ein biologisch aktives Mittel auf oder zusammen mit einem anorganischen Sulfat, Phosphat oder beiden und gegebenenfalls einem Füllstoff in einem wäßrigen Polyhydroxypolymer-System, ausgewählt aus der Gruppe nicht-modifizierte Stärken, Dextrine, natürliche Gummis und ihren Gemischen, emulgiert/dispergiert wird, das ausgefallene Polymere von der wäßrigen Phase abgetrennt, das Produkt getrocknet und das Produkt zu der gewünschten Teilchengröße zerkleinert wird.

3. Verfahren zur Herstellung eines biologisch aktiven Mittels mit kontrollierter Freigabe, dadurch **gekennzeichnet,** daß ein biologisch aktives Mittel auf oder zusammen mit einem anorganischen Sulfat, Phosphat oder beiden und gegebenenfalls einem Füllstoff in einem wäßrigen Polyhydroxypolymer-System, ausgewählt aus der Gruppe nicht-modifizierte Stärken, Dextrine, natürliche Gummis und ihren Gemischen, emulgiert/dispergiert wird, ein weiterer Teil eines anorganischen Sulfats, Phosphats oder ihren Gemischen und gegebenenfalls Füllstoff zugegeben wird, während gut gemischt wird, das ausgefallene Polymer von der wäßrigen Phase abgetrennt, das Produkt getrocknet und das Produkt auf die gewünschte Teilchengröße zerkleinert wird.

4. Verfahren nach Anspruch 1, dadurch **gekennzeichnet, daß** das biologisch aktive Mittel O,O-Dimethyl- oder O,O-Diethyl-O-p-nitrophenyl-phosphorthioat ist, das anorganische Salz aus der Gruppe Alkali-, Ammonium-, Aluminium- und Magnesiumsulfaten ausgewählt wird und der gegebenenfalls vorhandene Füllstoff ausgewählt wird aus der Gruppe Diatomite, Attapulgite, Bentonite, Talke, Montmorillonite, Kaoline, Perlite, Vermiculite und Maiskolbengries.

5. Verfahren nach Anspruch 2, dadurch **gekennzeichnet, daß** das biologisch aktive Mittel O,O-Diethyl-O-(3,5,6-trichlor-2-pyridyl)-phosphorthioat und das anorganische Salz Calciumsulfat sind.

6. Verfahren nach Anspruch 1, dadurch **gekennzeichnet, daß** das biologisch aktive Mittel O,O-Dimethyl- oder O,O-Diethyl-O-p-nitrophenyl-phosphorthioat ist, das anorganische Salz ausgewählt wird aus der Gruppe Alkaliphosphat und ihren Gemischen und der Füllstoff ausgewählt wird aus der Gruppe Diatomite, Attapulgite,Bentonite, Talke, Montmorillonite, Kaoline, Perlite, Vermiculite und Maiskolbengries.

7. Verfahren nach Anspruch 1, dadurch **gekennzeichnet, daß** ein hydrophiles Polymeres, ausgewählt aus der Gruppe nicht-modifizierte Stärken, Dextrine, natürliche Gummis und ihren Gemischen, mit einem wasserunlöslichen biologisch aktiven Mittel durch Zugabe eines anorganischen Salzes, ausgewählt unter Sulfaten, Phosphaten und ihren Gemischen, copräzipitiert wird und das ausgefallene Polymere von der wäßrigen Phase abgetrennt wird.

8. Verfahren nach Anspruch 7, dadurch **gekennzeichnet, daß** das biologisch aktive Material ein Herbizid ist.

9. Verfahren nach Anspruch 8, dadurch **gekennzeichnet,** daß das Herbizid eine Nitroverbindung ist.